# EUROPEAN PATENT APPLICATION

(11) **EP 0 555 727 A1**
(43) Date of publication of application: **18.08.1993**
(21) Application number: 93101562.2
(22) Date of filing: 02.02.1993
(51) Int. Cl.: G01P 15/12

(54) **Semiconductor accelerometer**

(30) Priority: 06.02.1992 JP 56364/92
(71) Applicant: NEC CORPORATION, Tokyo (JP)
(72) Inventor: Yano, Akihiro, c/o NEC Corporation, Minato-ku, Tokyo (JP)
(74) Representative: Glawe, Delfs, Moll & Partner

(57) **Abstract**

A semiconductor accelerometer comprises mass means (4) responsive to an impact for causing displacement from an initial position, support means (3) surrounding the mass in spaced apart relationship therewith for defining gap (6) therebetween, flexure means (5a,5b) for connecting opposing edges of the mass (4) to the support means (3) and permitting displacement of the mass (4) in response to the impact, the flexure means (5a,5b) thus forming accelerometer body assembly formed of a semiconductor (1) together with the mass and the support means, a plurality of pairs of stress detective elements (Ra-Rh), each of which is responsive to an impact originated stress for varying an electrical characteristics, respective pairs of the stress detective elements being arrange in symmetry relative to the center of the mass means (4), and each pair of stress detecting elements being arranged on the accelerometer so that both stress detecting elements are subject to the same mode stress in response to exertion of a specific direction of impact and to a difference mode of stress in response to exertion of an impact in the direction other than t specific direction for mutually cancelling variation of electric characteristics, and a circuit means for forming a Wheatstone bridge circuit with incorporating each pair of stress detecting elements (Ra-Rh) at each segment thereof.

## Description

### BACKGROUND OF THE INVENTION

The present invention relates to a semiconductor accelerometer. More specifically, the invention relates to a semiconductor accelerometer adapted to be fitted on a moving object and to detect an acceleration generated when an impact is exerted on the moving body.

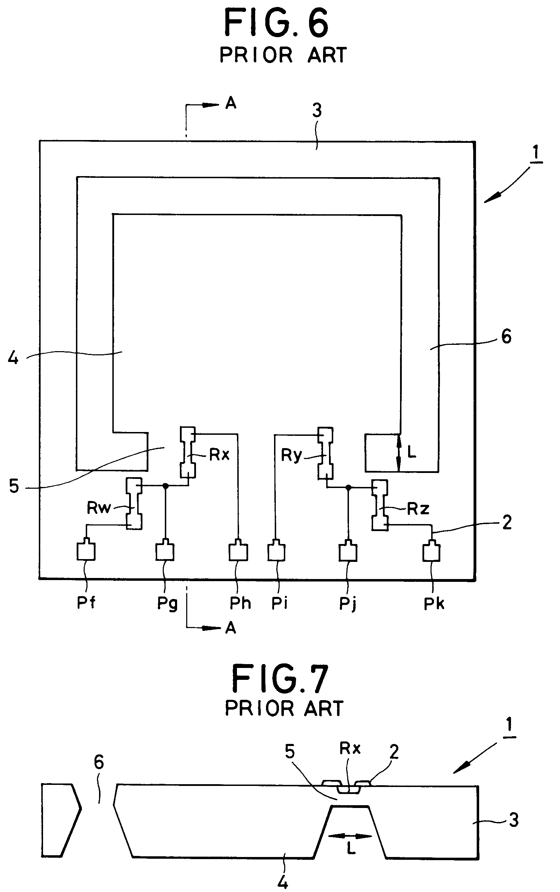

The typical construction of a semiconductor accelerometer is illustrated in **Figs. 6** and **7**, in which **Fig. 6** is a plan view and **Fig. 7** is a section taken along line **A - A**. The accelerometer is formed into a chip with a semiconductor substrate **1**, such as a silicon substrate, as a whole.

Basically, the semiconductor accelerometer comprises a mass portion **4** of an essentially rectangular semiconductor, rim portions **3** of semiconductor formed around the mass portion **4** with a regular interval **6**, and a thin flexuous beam portion **5** which connects the mass portion **4** with one of the rim portions **3**. The above-mentioned construction can be attained by forming the thin flexuous beam portion **5** and gap portions **6** in forms of through openings in the semiconductor substrate **1** employing a thin film technology, such as etching.

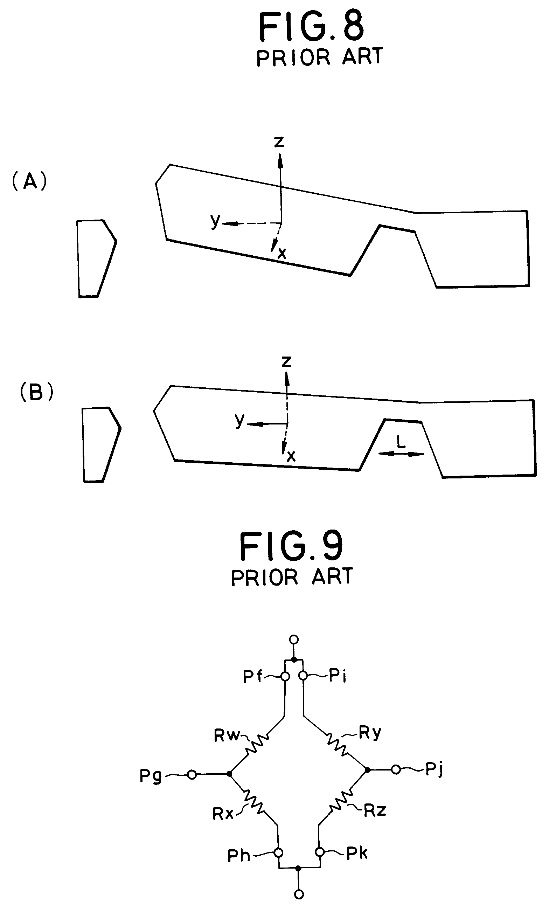

On one primary surface of the semiconductor substrate **1**, detecting resistor elements **R**_{**w**} ∼ **R**_{**z**}, conductor wiring **2** and electrodes **P**_{**f**} ∼ **P**_{**k**}, which are basic components of the accelerometer, are formed. Namely, for a circuit forming surface as one primary surface of the semiconductor substrate **1**, two detecting resistor elements **R**_{**x**} and **R**_{**y**} are mounted on the surface of the thin flexuous beam portion **5** and another two detecting resistor elements **R**_{**w**} and **R**_{**z**} are mounted on the surface of the rim portions **3**. For transmitting variation of resistances of these detecting resistor elements **R**_{**w**}, **R**_{**x**}, **R**_{**y**} and **R**_{**z**} externally, the conductor wiring **2** and electrode pick-up portions **P**_{**f**} ∼ **P**_{**k**} are formed. These detecting resistor elements **R**_{**w**}, **R**_{**x**}, **R**_{**y**} and **R**_{**z**} form a Wheatstone bridge circuit, as shown in **Fig. 9**. The detecting resistor elements **R**_{**x**} and **R**_{**y**} on the thin flexuous beam portions **5** and the detecting resistor elements **R**_{**w**} and **R**_{**z**} on the rim portions **3** are wired to oppose to each other in each arm of the Wheatstone bridge circuit.

The detecting resistor elements **R**_{**w**}, **R**_{**x**}, **R**_{**y**} and **R**_{**z**} in the semiconductor accelerometer is normally formed by ion implantation, impurity diffusion or so forth in the normal semiconductor production process. In case, the detecting resistor element is a P-type resistor by an impurity, such as boron or so forth, a resistance value is decreased in response to a compression stress by piezoresistance effect, and increased in response to tensile stress. It should be noted, incase a N-type resistor with an impurity of arsenic or so forth, the increasing and decreasing of the resistance value becomes opposite to that set forth above.

Next, the principle of operation of the semiconductor accelerometer will be discussed in terms of the P-type resistor with reference to **Fig. 8**. When an impact is exerted in a negative direction of a z-axis of the semiconductor substrate **1**. i.e. the vertically downward direction relative to the circuit forming surface, the mass portion **4** moves upward direction (a positive direction in the z-axis) due to inertia moment to cause compression of the thin flexuous beam portion **5**. At this time, the detecting resistor elements **R**_{**x**} and **R**_{**y**} are subject the compression stress to decrease the resistance value.

Conversely to this, since the detecting resistor elements **R**_{**w**} and **R**_{**z**} are formed on a thicker rim portions **3**, the resistance values thereof are held unchanged. Accordingly, in the Wheatstone bridge circuit of **Fig. 9**, a balance of the resistance values is destroyed to cause variation of output. Thus, the magnitude of the impact, i.e. the magnitude of the acceleration can be converted in to variation of the electric signal. It should be noted that when the impact is exerted in the positive direction in the z-axis direction, the detecting resistor elements **R**_{**x**} and **R**_{**y**} are subject a tensile stress to increase the resistance values. Increasing of the resistance values causes destroy of the balance of the Wheatstone bridge to cause the corresponding output.

Similarly, when an impact is exerted in the positive direction in a y-axis direction which is the lengthwise direction of the thin flexuous beam portion **5** (as shown in **Fig. 8(B)**, the length of the thin flexuous beam portions **5** are assumed as **L**), since the gravity center of the mass portion **4** is present slightly lower than the circuit forming surface, the mass portion **4** moves upwardly due to the inertia force, as shown in **Fig. 8(B).** As a result, the detecting resistor **R**_{**x**} and **R**_{**y**} are subject to the compression stress to generate the output corresponding thereto.

In such conventional semiconductor accelerometer, the output is generated even in response to an impact in the y-axis direction (both of the positive and negative directions), i.e. the lengthwise direction (**L**) of the thin flexuous beam portion **5**. Therefore, it holds a problem in difficulty of converting the magnitude of the impact in only the specific direction, i.e. z-axis direction in the shown case, into the electric signal variation.

### SUMMARY OF THE INVENTION

Therefore, it is an object of the present invention to provide a semiconductor accelerometer which can effectively convert a magnitude of impact exerted in only in the desired one direction and is not sensitive to the impacts exerted in other directions.

In order to accomplish the above-mentioned and other objects, a semiconductor accelerometer, according to one aspect of the invention, comprises:
a semiconductor mass portion of substantially rectangular configuration;
semiconductor rim portions provided around the mass portion with a given intervals;
first and second semiconductor thin flexuous beam portion disposed between opposite first and second edges of the mass portion and the rim portion and connecting therebetween;
a first boundary between the rim portion and the first thin flexuous beam portion on a first line extending perpendicular to the first and second edges of the mass portion;
a second boundary between the first thin flexuous beam portion and the mass portion on the first line;
a third boundary between the mass portion and the second thin flexuous beam portion on the first line;
a fourth boundary between the second thin flexuous beam portion and the rim portion on the first line;
first to fourth detecting resistor elements arranged at respective of the first to fourth boundaries;
a fifth boundary between the rim portion and the first thin flexuous beam portion on a second line extending parallel to the first line and positioned in symmetry to the first line with respect to a center of the mass portion;
a sixth boundary between the first thin flexuous beam portion and the mass portion on the second line;
a seventh boundary between the mass portion and the second thin flexuous beam portion on the second line;
a eighth boundary between the second thin flexuous beam portion and the rim portion on the second line; and
fifth to eighth detecting resistor elements arranged at respective of the fifth to eighth boundaries.

According to another aspect of the invention, a semiconductor accelerometer comprises:
mass means responsive to an impact for causing displacement from an initial position;
support means surrounding the mass in spaced apart relationship therewith for defining gap therebetween;
flexure means for connecting opposing edges of the mass to the support means and permitting displacement of the mass in response to the impact, the flexure means thus forming accelerometer body assembly formed of a semiconductor together with the mass and the support means;
a plurality of pairs of stress detective elements, each of which is responsive to an impact originated stress for varying an electrical characteristics, respective pairs of the stress detective elements being arrange in symmetry relative to the center of the mass means, and each pair of stress detecting elements being arranged on the accelerometer so that both stress detecting elements are subject to the same mode stress in response to exertion of a specific direction of impact and to a difference mode of stress in response to exertion of an impact in the direction other than the specific direction for mutually cancelling variation of electric characteristics; and
a circuit means for forming a Wheatstone bridge circuit with incorporating each pair of stress detecting elements at each segment thereof.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the present invention, but are for explanation and understanding only.

In the drawings:
**Fig. 1** is a plan view of the preferred embodiment of a semiconductor accelerometer according to the present invention;
**Fig. 2(A)** is a section taken along line **A - A** of **Fig. 1**;
**Fig. 2(B)** is a section taken along line **B - B** of **Fig. 1**;
**Fig. 3(A)** is an illustration showing an example of deformation of a mass portion in response to an impact in z-axis direction in the preferred embodiment of the invention;
**Fig. 3(B)** is an illustration showing an example of deformation of the mass portion in response to an impact in y-axis direction;
**Fig, 3(C)** is an illustration showing an example of deformation of the mass portion in response to an impact in x-axis direction;
**Fig. 4** is an illustration showing an example of increasing and decreasing of resistance value of each detecting resistor element in the preferred embodiment of the invention;
**Fig. 5** is a circuit diagram showing connection of the detecting resistor elements in the preferred embodiment of the invention;
**Fig. 6** is a plan view of the conventional semiconductor accelerometer;
**Fig. 7** is a section taken along line **A - A** of **Fig. 6**;
**Fig. 8(A)** is an illustration showing an example of deformation of the mass in response to the impact in the z-axis direction in the accelerometer of **Fig. 6**; and
**Fig. 8(B)** is an illustration of an example of deformation of the mass in response to the impact in the y-axis direction; and
**Fig. 9** is a circuit diagram showing connection of the detecting resistor elements of the accelerometer of **Fig. 6**.

### DESCRIPTION OF THE PREFERRED EMBODIMENT

The preferred embodiment of a semiconductor accelerometer according to the present invention will be discussed hereafter in detail with reference to the accompanying drawings.

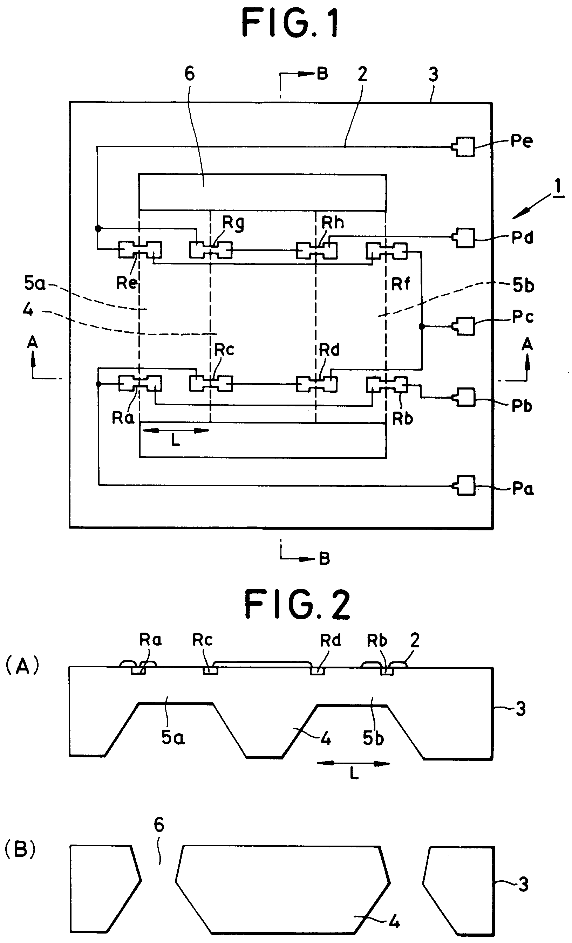

**Fig. 1** is a plan view of the preferred embodiment of a semiconductor accelerometer according to the invention, and **Figs. 2(A)** and **2(B)** are sections respectively taken along lines **A - A** and **B - B** of **Fig. 1**, It should be noted that like reference numerals to those of **Figs. 6** and **7** represent like elements.

The shown semiconductor accelerometer is formed as a chip on a semiconductor substrate **1**, such as a silicon substrate. The semiconductor accelerometer generally comprises a mass portion **4** of a semiconductor, rim portions **3** of a semiconductor, formed around the mass portion **4** with a given intervals **6**, and first and second thin flexuous beam portions **5a** and **5b** of semiconductors disposed between opposite two edges of the mass portion **4** and the rim portions **3** and connecting therebetween.

The above-mentioned construction is attained by forming the thin flexuous beam portions **5a** and **5b** and gaps **6** in forms of through openings in the semiconductor substrate by thin film technology, such as etching, similarly to the prior art. On one primary surface of the semiconductor substrate **1**, detecting resistor elements **R**_{**a**} ∼ **R**_{**h**}, conductor wiring **2** and electrodes **P**_{**a**} ∼ **P**_{**e**}, which are basic components of the accelerometer, are formed. The detecting resistor elements **R**_{**a**} ∼ **R**_{**h**} having piezoresistance effect is normally formed by ion implantation, impurity diffusion or so forth in the normal semiconductor production process. Also, the conductor wiring **2** and the electrodes **P**_{**a**} ∼ **P**_{**e**} are also formed of an appropriate conductive material, such as aluminum, through normal semiconductor production process.

The detecting resistor elements **R**_{**a**} ∼ **R**_{**d**} are arranged in alignment on a line perpendicular to the edges of the mass portion **4** connected to the thin flexuous beam portions **5a** and **5b**. On the other hand, the detecting resistor elements **R**_{**e**} ∼ **R**_{**h**} are arranged in alignment on another line parallel to the above-mentioned line. on which the detecting resistor elements **R**_{**a**} ∼ **R**_{**d**} are aligned. These lines are positioned in symmetry with respect to a center line of the mass portion **4**. The detecting resistor element **R**_{**a**} is formed at a boundary between the rim portion **3** and the thin flexuous beam portion **5a**. The detecting resistor element **R**_{**c**} is formed at a boundary between the thin flexuous beam portion **5a** and the mass portion **4**. The detecting resistor element **R**_{**d**} is formed at a boundary between the mass portion **4** and the thin flexuous beam portion **5b**. The detecting resistor **R**_{**b**} is formed at a boundary between the thin flexuous beam portion **5b** and the rim portion **3**.

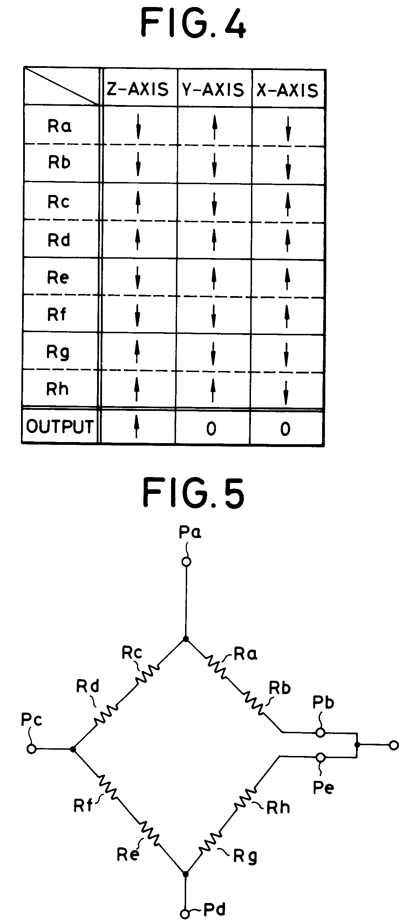

On the other hand, the detecting resistor element **R**_{**e**} is formed at a boundary between the rim portion **3** and the thin flexuous beam portion **5a**. The detecting resistor element **R**_{**g**} is formed at a boundary between the thin flexuous beam portion **5a** and the mass portion **4**. The detecting resistor element **R**_{**h**} is formed at a boundary between the mass portion **4** and the thin flexuous beam portion **5b**. The detecting resistor **R**_{**f**} is formed at a boundary between the thin flexuous beam portion **5b** and the rim portion **3**. The detecting resistor elements **R**_{**a**} and **R**_{**b**}, **R**_{**c**} and **R**_{**d**}, **R**_{**e**} and **R**_{**f**}, and **R**_{**g**} and **R**_{**h**} are respectively connected in series through aluminum wiring. These four series circuits are connected by the conductor wiring **2** for forming respective arms of the Wheatstone bridge, as shown in **Fig. 5.**

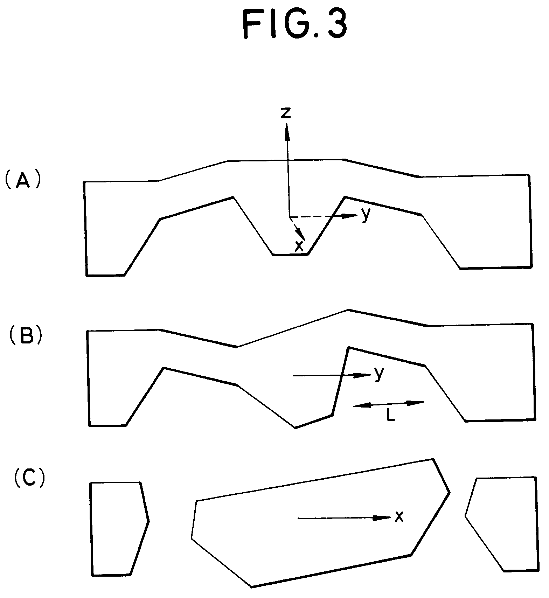

Operation of the semiconductor accelerometer constructed as set forth above will be discussed with reference to **Figs. 3** and **4**. It should be noted that, similarly to discussion for the prior art, the following discussion will be given in terms of the P-type resistor.

At first, as shown in **Fig. 3(A).** when an impact is exerted on the substrate **1** in a negative direction of the z-axis direction, namely vertically downward with respect to one primary surface of the semiconductor substrate, the mass portion **4** is moved upwardly due to inertia. Accordingly, the thin flexuous beam portions **5a** and **5b** are compressed so that the mass portion **4** is pulled by the thin flexuous beam portions. Therefore, as shown in **Fig. 4**, the detecting resistor elements **R**_{**a**}, **R**_{**b**}, **R**_{**e**} and **R**_{**f**} at the side of rim portions **3** of the thin flexuous beam portions **5a** and **5b** are subject compression stress to reduce resistance values thereof. Conversely, the detecting resistor elements **R**_{**c**}, **R**_{**d**}, **R**_{**g**} and **R**_{**h**} at the side of the mass portion **4** of the thin flexuous beam portions **5a** and **5b** are subject tensile stress to increase the resistance values thereof. As a result, the balance of the resistance values in the Wheatstone bridge of **Fig. 5** is destroyed to cause variation of the output. Accordingly, the magnitude of the impact, i.e. the magnitude of the acceleration can be converted into the variation of the electric signal.

On the other hand, when an impact is exerted in the positive direction in the z-axis direction, the mass portion **4** is displaced downwardly. Then, the detecting resistor elements **R**_{**a**}, **R**_{**b**}, **R**_{**e**} and **R**_{**f**} at the side of rim portions **3** of the thin flexuous beam portions **5a** and **5b** are subject tensile stress to increase resistance values thereof. Conversely, the detecting resistor elements **R**_{**c**}, **R**_{**d**}, **R**_{**g**} and **R**_{**h**} at the side of the mass portion **4** of the thin flexuous beam portions **5a** and **5b** are subject compression stress to reduce the resistance values thereof. As a result, the balance in the Wheatstone bridge is destroyed to obtain the corresponding output.

Next, as shown in **Fig. 3(B)**, when the impact is exerted in the positive direction in the y-axis direction which corresponds to the lengthwise direction of the thin flexuous beam portions of the length **L** (toward right in the drawing), the tensile stress acts on the boundary between the rim portion **3** and the thin flexuous beam portion **5a**, and the compression stress acts on the boundary between the side of the mass portion **4** and the thin flexuous beam portion **5a**. Conversely, the compression stress acts on the boundary between the rim portion **3** and the thin flexuous beam portion **5b**, and the tensile stress acts on the boundary between the mass portion **4** and the thin flexuous beam portion **5b**. Therefore, the resistance values of the detecting resistor elements **R**_{**a**}, **R**_{**d**}, **R**_{**e**} and **R**_{**h**} are increased, and the resistance values of the detecting resistor elements **R**_{**b**}, **R**_{**c**}, **R**_{**f**} and **R**_{**g**} are reduced. Accordingly, the sum of the resistance values of two resistors in each arm of the Wheatstone bridge of **Fig. 5** is held unchanged. As a result, no output will be generated in response to the impact in the y-axis direction.

When the impact is exerted in the positive direction in the x-axis direction which corresponds to the width direction (transverse to the lengthwise direction) of the thin flexuous beam portions **5a** and **5b**, a distortion is cased in the thin flexuous beam portions **5a** and **5b** as shown in **Fig. 3(c)**. Then, the resistance values of the detecting resistor elements **R**_{**a**}, **R**_{**b**}, **R**_{**g**} and **R**_{**h**} are decreased, and the resistance values of the detecting resistor elements **R**_{**c**}, **R**_{**d**}, **R**_{**e**} and **R**_{**f**} are increased. Accordingly, the total resistance value in each arm of the Wheatstone bridge circuit can be held unchanged so as not to generate the output of the accelerometer.

As set forth above, according to the present invention, the detecting resistors are arranged so that the variation of the resistance values of the detecting resistor elements in response to the impact in a direction other than the specific direction, can be successfully canceled so as to permit detecting of only impact in the specific direction. Therefore, the semiconductor accelerometer according to the present invention can detect the acceleration in only one desired direction.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. A semiconductor accelerometer comprising:
mass means responsive to an impact for causing displacement from an initial position;
support means surrounding said mass in spaced apart relationship therewith for defining gap therebetween;
flexure means for connecting opposing edges of said mass to said support means and permitting displacement of said mass in response to said impact, said flexure means thus forming accelerometer body assembly formed of a semiconductor together with said mass and said support means;
a plurality of pairs of stress detective elements, each of which is responsive to an impact originated stress for varying an electrical characteristics, respective pairs of said stress detective elements being arrange in symmetry relative to the center of said mass means, and each pair of stress detecting elements being arranged on said accelerometer so that both stress detecting elements are subject to the same mode stress in response to exertion of a specific direction of impact and to a difference mode of stress in response to exertion of an impact in the direction other than said specific direction for mutually cancelling variation of electric characteristics; and
a circuit means for forming a Wheatstone bridge circuit with incorporating each pair of stress detecting elements at each arm thereof.

2. A semiconductor accelerometer as set forth in claim 1, wherein each of said flexure means has a first end connected to said mass means and a second end connected to said support means, and each of stress detective elements in said pair includes a first stress detective element mounted on said first end and a second stress detective element mounted on said second end.

3. A semiconductor accelerometer as bet forth in claim 2, wherein each stress detective element comprises a piezoresistive element.

4. A semiconductor accelerometer comprising:
a semiconductor mass portion of substantially rectangular configuration;
semiconductor rim portions provided around said mass portion with a given intervals;
first and second semiconductor thin flexuous beam portions disposed between opposite first and second edges of said mass portion and said rim portion and connecting therebetween;
a first detecting register element arranged at a first boundary between said rim portion and said first thin flexuous beam portion on a first line extending perpendicular to said first and second edges of said mass portion;
a second detecting register element arranged at a second boundary between said first thin flexuous beam portion and said mass portion on said first line;
a third detecting register element arranged at a third boundary between said mass portion and said second thin flexuous beam portion on said first line;
a fourth detecting register element arranged at a fourth boundary between said second thin flexuous beam portion and said rim portion on said first line;
a fifth detecting register elements arranged at a fifth boundary between said rim portion and said first thin flexuous beam portion on a second line extending parallel to said first line and positioned in symmetry to said first line with respect to a center axis of said mass portion;
a sixth detecting register element arranged at a sixth boundary between said first thin flexuous beam portion and said mass portion on said second line;
a seventh detecting register element arranged at a seventh boundary between said mass portion and said second thin flexuous beam portion on said second line; and
an eighth detecting register element arranged at an eighth boundary between said second thin flexuous beam portion and said rim portion on said second line.

5. A semiconductor accelerometer as set forth in claim 4, which further comprises:
a first wiring portion forming a first series circuit of said first and fourth detecting resistor elements;
a second wiring portion forming a second series circuit of said second and third detecting resistor elements;
a third wiring portion forming a third series circuit of said fifth and eighth detecting resistor elements;
a fourth wiring portion forming a fourth series circuit of said sixth and seventh detecting resistor elements, and
a Wheatstone bridge circuit employing said first to fourth series circuits as arm.

6. A semiconductor accelerometer as set forth in claim 4, wherein each of said detecting resistor elements comprises a piezoresistive element.

7. A semiconductor accelerometer as set forth in claim 4, wherein said detecting resistor element is a resistor formed by doping impurity into one primary surface of a semiconductor.
